(19) Europäisches Patentamt
European Patent Office
Office européen des brevets

(11) **EP 4 610 691 A1**

(12) **EUROPEAN PATENT APPLICATION**

(43) Date of publication:
**03.09.2025 Bulletin 2025/36**

(21) Application number: 24190578.5

(22) Date of filing: **24.07.2024**

(51) International Patent Classification (IPC):
**G01S 7/288** (2006.01)    **G01S 7/41** (2006.01)
**G01S 13/58** (2006.01)    **G01S 13/42** (2006.01)

(52) Cooperative Patent Classification (CPC):
**G01S 7/417; G01S 7/006; G01S 7/2883;
G01S 13/0209; G01S 13/42; G01S 13/582;
G01S 13/765**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.02.2024 IN 202441014890**

(71) Applicant: **NXP B.V.**
**5656 AG Eindhoven (NL)**

(72) Inventors:
• **Spreitzer, Robert**
**5656AG Eindhoven (NL)**

• **Sethuraman, Prasanna Kumar**
**5656AG Eindhoven (NL)**
• **Ma, Hang**
**5656AG Eindhoven (NL)**

(74) Representative: **Krott, Michel**
**NXP Semiconductors
Intellectual Property Group
High Tech Campus 60
5656 AG Eindhoven (NL)**

Remarks:
Amended claims in accordance with Rule 137(2)
EPC.

(54) **METHOD FOR TRAINING A MACHINE LEARNING MODEL FOR A RADAR DEVICE**

(57)     Method for providing a machine learning, ML, model (10), the ML model (10) to be used for detection of radar targets (1), comprising the steps:
- providing of ground truth (GT);
- wherein the ground truth (GT) is provided either from radar ranging or from results of radar signal processing; and
- training of the ML model (10) under usage of the ground truth (GT) together with results of radar signal processing (40).

Fig. 11

EP 4 610 691 A1

## Description

TECHNICAL FIELD

The present disclosure relates to a method for training a machine learning model for a radar device. Furthermore, the present disclosure relates to a radar device. Furthermore, the present disclosure relates to a computer implemented method for carrying out the proposed method.

BACKGROUND

UWB modems can be used as an impulse radar, where a short duration pulse is transmitted, wherein its reflections from targets in the environment are received. These reflections are captured as change in the channel impulse response (CIR) measured by a receiver. With strong coupling between the co-located transmitter and receiver, the delay at which the reflected signal is present can be estimated only after removing the coupled path. The delay estimation is done by identifying the tap index at which peak can be found in the CIR after coupled path is removed. This peak detection approach works well when there is good signal to noise ratio (SNR), but is unreliable under poor SNR and during scenario where there are many nearby reflections, such as people standing in a group for example. Machine learning models can be employed in such scenarios to improve target detection, but they require extensive training with reliable ground truth.

Target detection in ultra-wideband (UWB) radar systems may be sensitive towards variations in the channel response characterized by a second order statistics thereof. Unidentified noise sources may significantly tamper with these statistics, introducing variance changes in the received UWB signals. These changes are indistinguishable from statistical changes introduced by moving radar targets, making the latter hardly or no longer detectable.

Machine learning models for target detection in radar are trained using either simulators or measurements that are collected and labelled manually or with an expensive third party ground truth measurement system.

GPS/GNSS based localization-assistant data labelling is used in building autonomous driving radar datasets, wherein GPS/GNSS requires extra hardware from radar devices.

N. Scheiner, N. Appenrodt, J. Dickmann and B. Sick, "Automated ground truth estimation of vulnerable road users in automotive radar data using GNSS", Proc. IEEE MTT-S International Conference Microwave Intelligent Mobility, 2019 discloses an automated way of acquiring data labels which uses a highly accurate and portable global navigation satellite system (GNSS). The shown system is discussed besides a revision of other label acquisitions techniques and a problem description of manual data annotation.

H. Caesar et al., "nuScenes: A multimodal dataset for autonomous driving", Proc. IEEE Conf. Comput. Vis. Pattern Recognit., 2020 discloses nuTonomy scenes (nuScenes), with a first dataset to carry a full autonomous vehicle sensor suite with six cameras, five radars and one lidar, all with full 360 degree field of view.

Jiang, W.; Ren, Y.; Liu, Y.; Leng, J., "Artificial Neural Networks and Deep Learning Techniques Applied to Radar Target Detection: A Review", Electronics 2022, shows a review of applications of deep learning in the field of RTD and a summary of possible limitations.

SUMMARY

It is an object to provide an improved method for training a machine learning model for a radar device.

According to a first aspect of the present disclosure there is provided a method for training a machine learning model to be used for detection of radar targets, comprising the steps:

- providing of ground truth;
- wherein the ground truth is provided either from UWB ranging or from results of radar signal processing; and
- training of the ML model under usage of the ground truth together with results of radar signal processing.

Advantageously, ground truth may be obtained in two different ways for the sake of the training of the ML model. The ML model is trained via ground truth, having been obtained in a reliable and low cost way. That is, a very accurate reference of ground truth is used to train the ML model in order to be used in various radar applications. The ML model can be used in radar devices to detect radar targets in problematic environments (e.g. having a lot of reflectors).

According to a further aspect there is provided a radar device configured to perform the proposed method.

According to a further aspect there is provided a computer implemented method comprising executable instructions which, when executed by a radar device cause said radar device or an electronic device to carry out the proposed method.

According to one or more embodiments, the ground truth is represented by estimated target distance or estimated target location, wherein the target location is specified via distance and angle. In this context, the distance and angle of the target means corresponding values relative to the UWB device. When UWB ranging measurements are available, results of the ranging measurements may be used in order to provide the ground truth.

According to one or more embodiments, data of a range doppler map is used as the results of the radar processing and input to the ML model.

According to one or more embodiments, the training process of the ML model is performed online or offline before using it in an inference mode with the radar device. In this way, various possibilities are provided in order to train the ML model.

According to one or more embodiments, the ground truth is obtained by means of a UWB radar device operated in radar mode and/or ranging mode.

According to one or more embodiments, for obtaining results of UWB ranging and radar signal processing and ranging packets and radar packets are sent by the radar device in a time-interleaved way simultaneously. In this way, real-time training of the ML model is enabled.

According to one or more embodiments wherein a retraining of the ML model is performed. In this way, advantageously, also a re-training of the ML model can be performed during the usage of the radar device in the field.

According to one or more embodiments radar signal processing is also employed in the radar device to estimate a target distance and can additionally be used to provide ground truth for training the ML model. An even further improved way of providing ground truth is supported in this way.

BRIEF DESCRIPTION OF DRAWINGS

The aspects defined above and further aspects of the present disclosure are apparent from the examples of embodiment to be described hereinafter with reference to the appended drawings, which are explained with reference to examples of embodiment. However, the disclosure is not limited to the described examples of embodiment.

All illustrations in the drawings are schematical. It is noted, that in different figures, similar or identical elements or features are provided with the same reference signs or with reference signs, which are different from the corresponding reference signs only within the first digit. In order to avoid unnecessary repetitions elements or features which have already been elucidated with respect to a previously described embodiment are not elucidated again at a later position of the description.

FIG. 1    shows a diagram of a conventional UWB radar system;
FIG. 2    is a diagram showing in principle a generation of CIRs;
FIG. 3    shows the generation of multiple CIRs by repeating radar transmissions and an example CIR in a multiple reflector environment;
FIG. 4    shows a CIR matrix;
FIG. 5    shows a range doppler map;
FIG. 6    shows a ranging process between two UWB devices;
FIG. 7    shows two different scenarios where the UWB device either uses radar or ranging measurements to estimate target distance ;

FIG. 8    shows an exemplary target distance estimation with signal processing;
FIG. 9    shows an exemplary radar target detection using a pretrained ML model;
FIG. 10   shows in principle a training of a ML model;
FIG. 11   is a principle system diagram of a proposed method;
FIG. 12   shows a time line with radar packets and ranging packets;
FIG. 13   shows a scenario with additional targets, in which radar target detection may be improved with the proposed method; and
FIG. 14   shows a flow of the proposed method

DESCRIPTION OF EMBODIMENTS

Machine learning techniques can be applied for detecting moving targets (e.g. persons) with UWB radar. Such techniques, however, require extensive training with large labelled datasets where the labels are the distance and angle of target locations. Such labelling requires an independent system that can reliable provide a ground truth and such solutions are expensive and time consuming. Any errors in ground truth then significantly affects the performance of machine learning algorithms since they learn to incorrectly map the patterns in the data.

The present disclosure proposes methods that use signal processing and communication capabilities of an UWB device to generate real time datasets with reliable ground truth, which can be used to train the machine learning models on the fly and/or offline. This enables us to further learn patterns specific to different environments using transfer learning techniques to incrementally train the models in the field.

Proposed are methods by which target locations can be identified in real time by using the signal processing and wireless communication capabilities of UWB devices and can be used as ground truth to train the ML-model for a target detection in different environments.

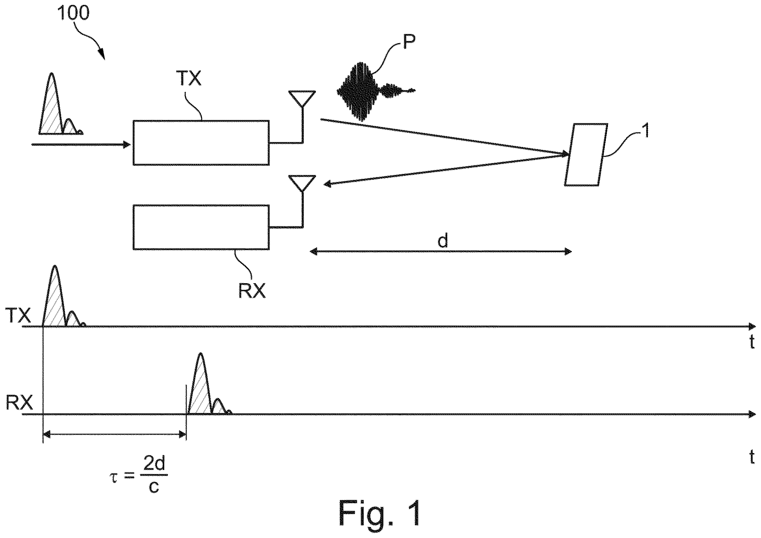

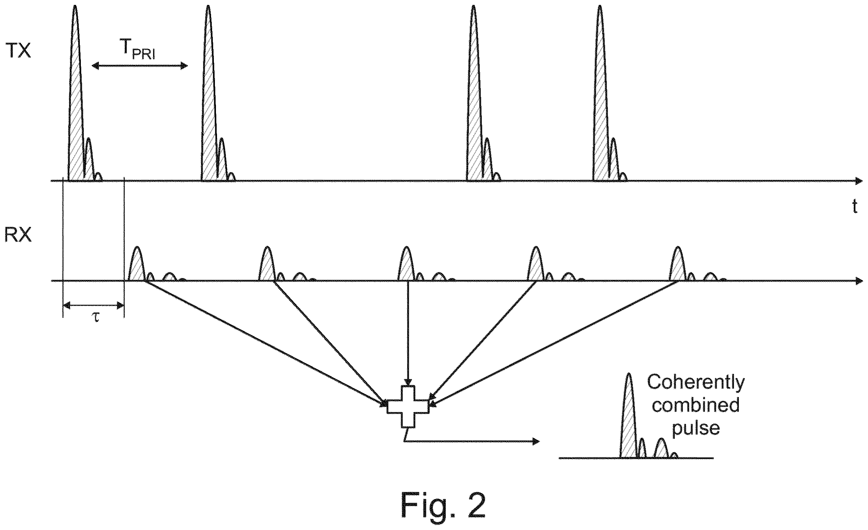

FIG. 1 in principle shows a pulsed UWB radar device 100. A transmitter TX of said UWB radar device 100 sends out a series of pulses P with a period $T_{PRI}$ (duration of pulse repetition intervals) determined by a pulse repetition interval and the receiver RX simultaneously listens for reflected pulses from a radar target 1. The receiver RX thus measures the channel impulse response (CIR) via coherent combining of pulses P, as depicted in FIG. 2, which is denoted as $h(t, \tau)$, where $\tau$ indicates the time delay from the start of the transmit pulse to the duration for which the receiver RX is measuring the CIR.

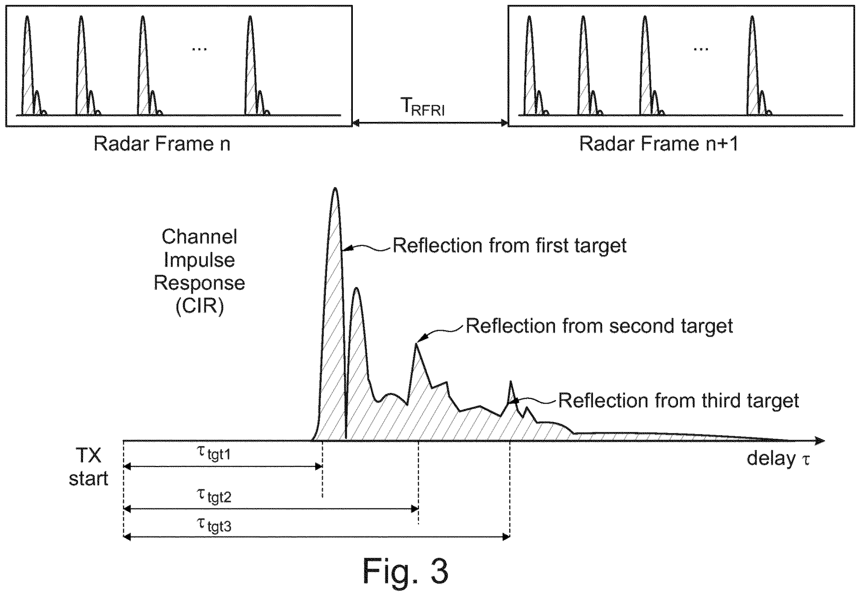

This channel measurement is carried out once for every radar frame transmitted at time instance t and can be repeated periodically with $t = nT_{RFRI}$, as principally shown in FIG. 3, where the period is given by the radar frame repetition interval (RFRI). The CIR measured at time t = $nT_{RFRI}$ is then written as:

$$h(n, \tau)$$

where the delay $\tau = \ell T_s$ is also discrete and depends on the receiver sampling time $T_s$. FIG. 3 shows channel impulse responses obtained by reflections of three different radar targets.

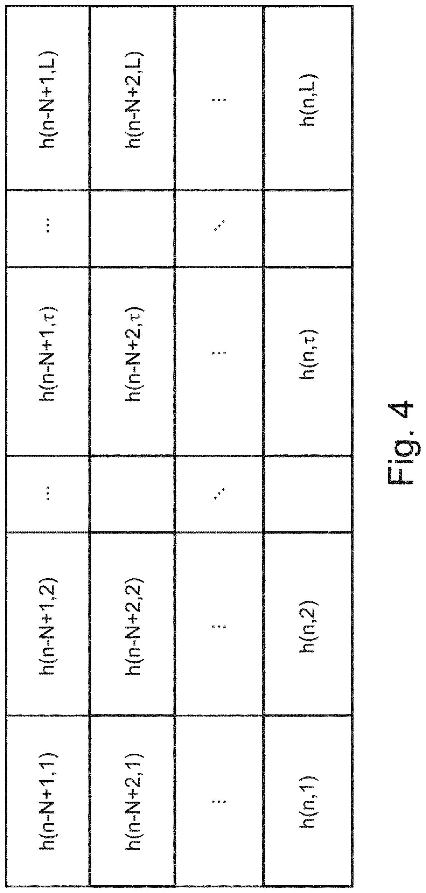

A matrix can be formed with each CIR-measurement per frame forming a row, and the columns of the matrix indicate how the CIR at delay $\tau = \ell T_s$ changes across multiple measurements. An example of such a CIR matrix is shown in FIG. 4 in which one CIR represents one measurement, with the parameters:

h ...      one value (tap) of CIRs
n ...      time index
L ...      number of taps
N ...      number or CIRs

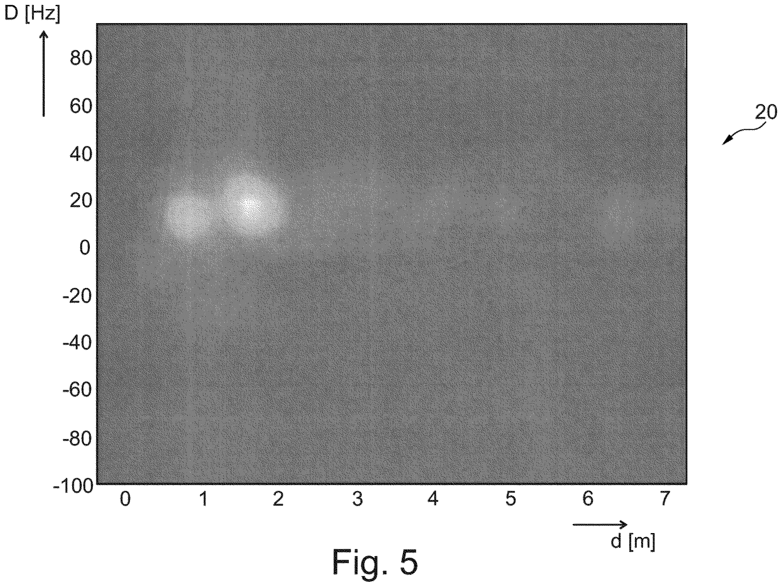

Both the target range (distance d) and the change due to target movements over time are captured by this CIR-matrix. Afterwards, a Fast Fourier transform (FFT) is performed across each column to get a range doppler map 20, which show representations of targets depending of distance d and doppler frequency D. FIG. 5 shows an example of a range doppler map 20 indicating a radar target, identified at a certain distance d with a certain doppler frequency D.

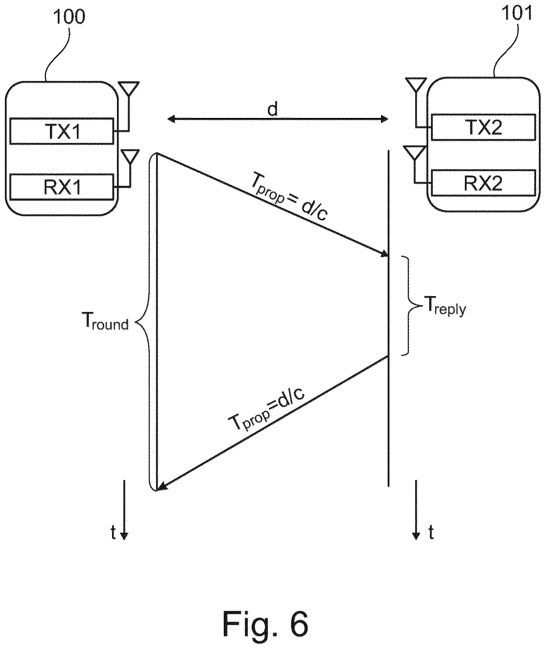

FIG. 6 shows a UWB radar ranging system with two UWB radar devices 100, 101 which communicate wirelessly in order to estimate a distance d between them. A first UWB radar device 100 transmits a UWB packet (not shown) that is received by a second UWB radar device 101 after a propagation delay $T_{prop}$. The second UWB radar device 101 then prepares a response to the first UWB radar device 100 where it includes the time it takes to response $T_{reply}$. The first UWB radar device 100 then receives the UWB packet from the second UWB radar device 101 to compute the total time $T_{round}$ and can estimate the propagation delay using the following equation:

$$T_{prop} = (T_{round} - T_{reply})/2 \qquad (1)$$

The transmitter TX1 and the receiver RX1 of the first UWB radar device 100 are not turned "ON" simultaneously for the illustrated wireless communication process.

An accuracy of distance estimation with this method depends on the accuracy with which the first UWB device 100 and the second UWB device 101 can determine the exact time at which the UWB packets are received by them. A precise estimation of the time, beyond what is specified by the UWB standard, can be achieved by signal processing algorithms inside the first and second UWB radar devices 100, 101, that use the CIR measurements to estimate the precise time of arrival.

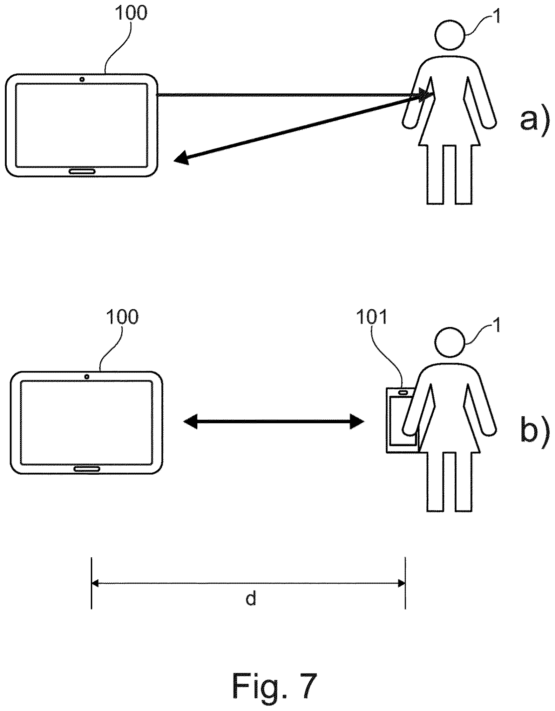

FIG. 7 shows in principle two scenarios with different operation modes of UWB devices, wherein FIG. 7a shows the first UWB device 100 operating as a radar system ("radar mode" of the UWB device). In contrast thereto, FIG. 7b shows the first and second UWB devices 100, 101 as a wireless communication system. When using the two UWB devices 100, 101 as wireless communication devices as indicated in FIG. 7b, the distance d between the two UWB devices 100, 101 can be measured ("ranging mode" of the UWB device).

When the first UWB device 100 is used in radar mode as indicated in FIG. 7a, distance to reflecting targets 1 (e.g. a person) can be measured without needing another UWB device. Performing a distance measurement in the radar mode requires detecting the target locations in the range doppler map, using either signal processing approaches or machine learning models (ML-models). Results by signal processing may advantageously be obtained on-chip, i.e. in real time operation of the UWB device in radar mode.

While signal processing approaches do fairly well in environments where targets are well separated and there is sufficient signal-to-noise Ratio (SNR), ML-models can do better in challenging environments with nearby reflections, if they can be sufficiently trained to learn the effects of the environment. In addition, ML-model can be much faster in inference (mapping inputs to outputs) than signal processing approaches and switching to ML-model can therefore advantageously save significant processing power.

However, training ML-models requires significant amount of data, not just range doppler map measurements, but also information about where the targets are located (ground truth data). Generating this data along with the ground truth is time consuming and expensive, and since the data collection is a manual process, it is to some extent unreliable. There is also needed an independent distance measurement system to generate ground truth to even begin to automate the process of training the ML-models.

The present disclosure addresses this problem by training the ML models to achieve reliable target detection of UWB radar devices even in challenging environments. Proposed is (a) to configure the UWB device as radar and use the signal processing approach to target detection as the ground truth, and (b) to configure the UWB device for ranging (communication) and use the distance estimate between this device and the second device that is carried by target of interest to generate the ground truth.

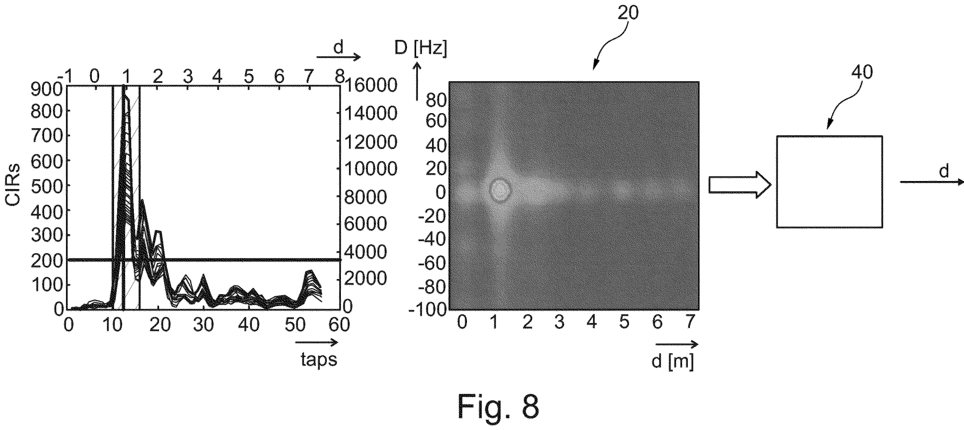

FIG. 8 shows in principle how ground truth may be obtained which is needed for training the ML model 10. As an example, approaches with radar signal processing 40 estimate the target distance d from the CIR matrix or the range doppler map 20 by using peak detection methods such as CFAR. CFAR (Constant False Alarm Rate), is a technique used in radar signal processing to detect and track targets in the presence of noise and clutter. The goal of CFAR is to maintain a constant probability of false alarm (PFA) while adapting to changes in the radar environment. CFAR measurements are done and passed through signal processing. From said signal processing distances d are extracted. The alternative is performing UWB ranging when it is available to get the target distance.

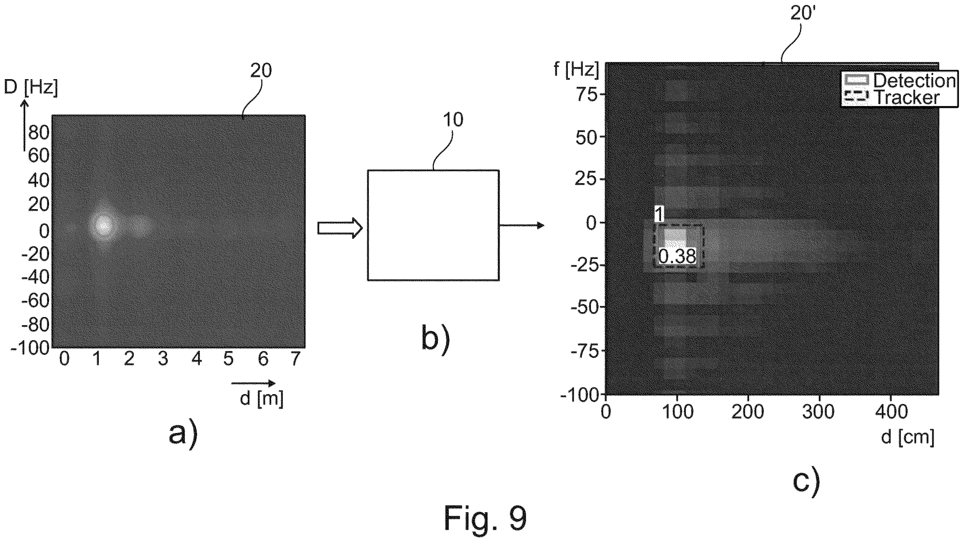

FIG. 9 shows in principle an example of target detection by using a pretrained ML-model/ML-network 10. The ML-model 10 needs to be pretrained with both inputs (range doppler map 20) and outputs (target location) before it can be used in the inference mode of the UWB radar device. This training is usually done "offline" by means of an electronic device with data of measurements that are collected and labelled (with ground truth) manually. One recognizes that a target in FIG. 9a in the range doppler map 20 is input to the ML model 10 of FIG. 9b. An output is basically the location of the target. Right a red covered box shows what ML model 10 needs to do. ML model 10 is trained to estimate the location of this target. FIGs. 9a, 9c both show range doppler maps 20, 20', wherein the range doppler map 20'of FIG. 9c has a bounding box, which indicates a distance and a velocity of the radar target 1. The range doppler map 20' can be implemented as application running on a UWB radar enabled mobile phone (not shown).

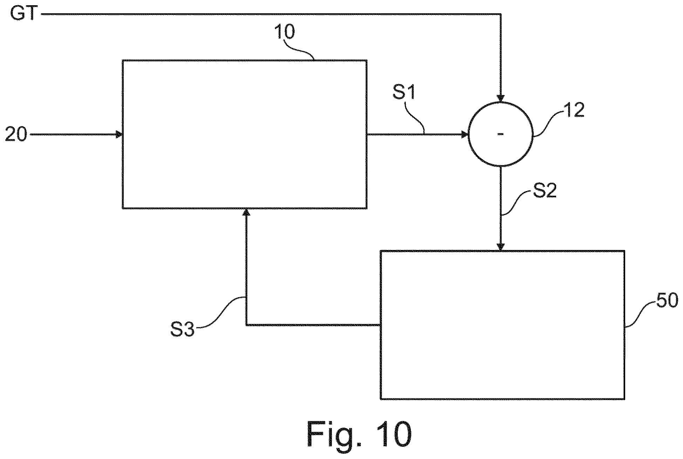

FIG. 10 shows in principle a training of a ML model 10 according to the present disclosure. One recognizes the ML model/network 10 which gets the range doppler map 20 as input. An output provides ground truth GT (estimated target locations) which are input to a summing point 12 to which also actual target locations are input in a step S1. An output of the summing point 12 provides in a step S2 data to gradient descent and back propagation block 50 which provides updated weights to the ML model 10 in a step S3.

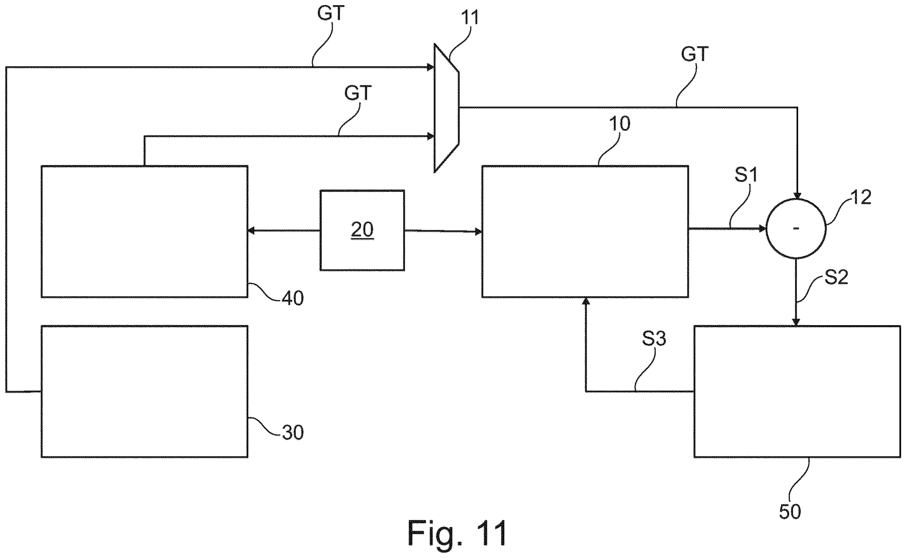

FIG. 11 shows the real-time training of the ML-model 10 of FIG. 10 in more detail, where distance estimation from UWB ranging and/or target estimation from signal processing approaches are used to train the ML-model 10. One recognizes radar signal processing 40 which delivers ground truth GT formed as estimated target locations to a multiplexer 11. Furthermore, in an alternative, results of ranging distance measurements 30 are provided as ground truth GT formed as estimated target distances to the multiplexer 11. Output data of the multiplexer 11 are delivered as a reference of ground truth GT to the summing point 12. Furthermore, data of a range doppler map 20 are provided both to the radio signal processing 40 and to the ML-model 10.

Output data relating to estimated target locations of the ML-model 10 are provided to the summing point 12. The summing point 12 subtracts the data from the multiplexer 11 and the data from the ML-model 10 and provides its outputs in a step S2 to a gradient descent and back propagation block 50. An output with updated weights of the gradient descent and back propagation block 50 is provided in a step S3 to the ML-model 10.

In this way, a training of the ML-model 10 is performed taking into account the data of the range doppler map 20 under usage of accurately obtained reference ground truth GT. The ground truth GT may be obtained by results of radar signal by means of a UWB radar device operated in radar mode. Alternatively, the ground truth GT may be obtained by ranging distance measurements, by means of the UWB radar device operated in ranging mode.

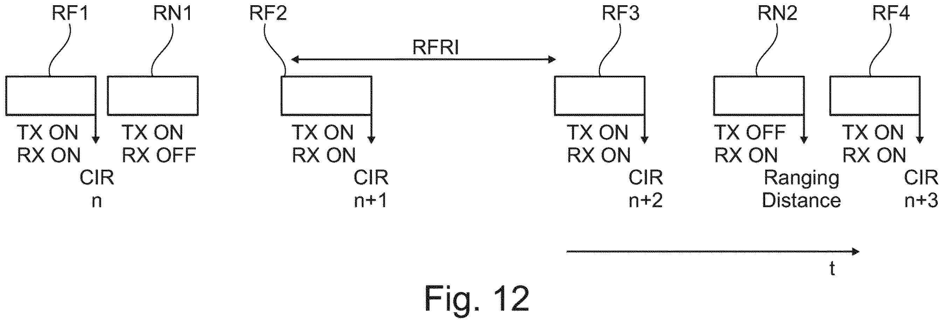

To achieve the measurements required for the proposed method, the UWB radar device 100 is designed to both radar and ranging measurements, as principally shown with respect to a timeline in FIG. 12. One recognizes that for CIR measurements with the radar device, both the transmitter TX and the receiver RX need to be ON at the same time. For ranging measurements, the transmitter TX needs to be ON only when transmitting the frame and the receiver RX needs to be ON only when receiving the response.

Radar frames and ranging frames are transmitted over a timeline t by a UWB radar device 100 (not shown). Beneath each of the frames there is depicted the corresponding state of the transmitter TX and the receiver RX (ON or OFF). One recognizes a first radar frame RF1 followed by a first ranging frame RN1. Between the radar frames RF2, RF3 a radar frame repetition interval (RFRI) is indicated. Afterwards a ranging frame RF3 is transmitted and a ranging frame RN2 represents the response of the ranging frame RN1, wherein data to a ranging distance are provided at the end of the ranging frame RN2. Afterwards the ranging frame RF4 is transmitted. At the end of the radar frames RF1, RF2, RF3 and RF4, respectively, the channel impulse responses $CIR_n$, $CIR_{n+1}$, $CIR_{n+2}$ and $CIR_{n+3}$, respectively, are provided.

In this way, simultaneous ranging and radar measurements are performed under usage of the transmitter TX and the receiver RX of the UWB radar device 100, thus providing ground truth GT to be used in the scenario of FIG. 11.

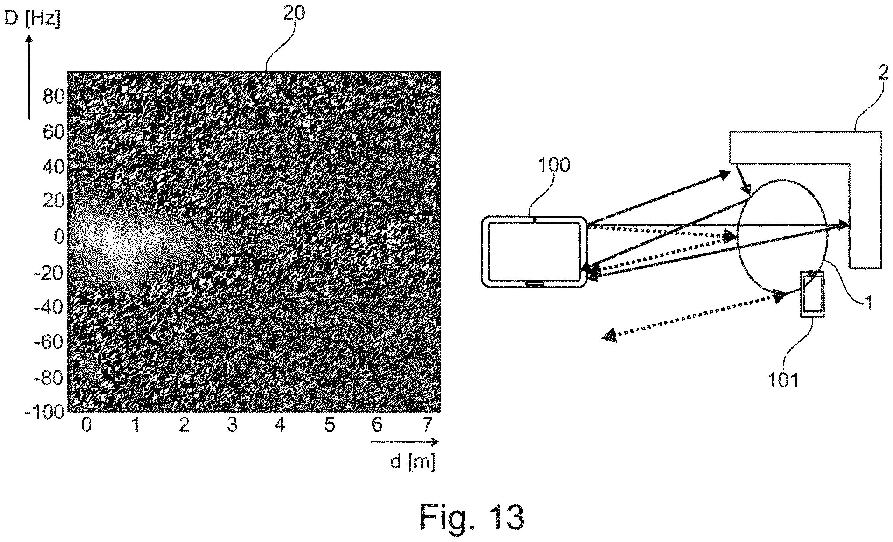

FIG. 13 shows a scenario with several nearby multipath reflections to the target 1 of interest and a corresponding range doppler map 20, which depicts conditions of said scenario. This may be a challenging environment for UWB radar since there are multiple reflections being received and there is no way to say which one of those reflections correspond to the target of interest. Reflections of interest are shown in FIG. 13 with dotted arrows and interfering reflections from a nearby object 2 are shown with solid arrows.

A ML-model 10 having been trained for such a scenario in the above elucidated way can learn that there are other reflectors around this distance. This learning however is environment specific and therefore, a real-time way is provided to train the ML-model 10 for different environments. If the radar target 1 has an attached UWB radar device 101 (for example, a person with a phone that has a UWB enabled smart phone), distance measurements from ranging can be used as the ground truth data for training the ML-model 10 to learn patterns which are specific to the environment. Using transfer learning approaches, most of the ML-model 10 would remain the same and only the last layer(s) need to be retrained, this requiring much less measurements for training. In an inference mode using a trained ML-model 10, the UWB radar device 100 can much better map the circumstances of the scenario shown e.g. in FIG. 13.

The present disclosure uses capabilities of a UWB radar system having ranging and radar capabilities, where target detection in radar mode can be performed using a pretrained ML-model 10, wherein the ML-model 10 can be trained in real-time by using distance measurements from ranging when such measurements are available, to learn environment specific patterns, as exemplary depicted in the scenario of FIG. 13. Alternatively or in addition, the training of the ML model 10 can also be done offline with data having been obtained beforehand.

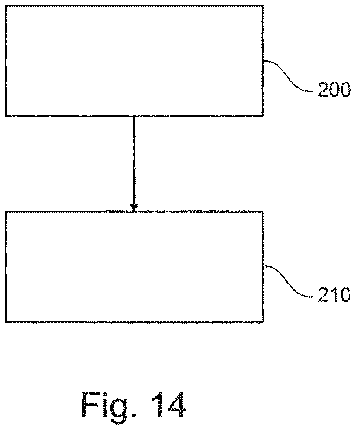

FIG. 14 shows a principle flow of the proposed method.

In a step 200 there is provided ground truth GT, the ground truth GT is provided either from UWB ranging or from results of UWB radar signal processing.

In a step 210 there is performed a training of the ML model 10 under usage of the ground truth GT together with results of radar signal processing 40.

Advantages of using ranging distance estimates are that ranging usually has a much higher sensitivity due to the transmitter TX not being ON when ranging response is being received and hence no self-interference from the transmitter TX. Also, ranging response from multiple devices are separated in time and hence can be reliably received even when the multiple devices are closer to each other.

This is not the case in radar measurements where the reflections from multiple nearby targets are received at the same time, except for the small delay between them. Ranging measurements therefore provide accurate ground truth data for training of the ML-model 10. Ranging measurement with the same UWB device 100 may also avoid differences in device calibration if an independent system is used for ground truth measurements.

When ranging measurements are not available, the ML-model 10 can be trained using signal processing approaches for target detection that can be achieved on the UWB radar device 100, and transfer learning methods are used to minimize the training when ranging measurements are available.

Once the ML-model 10 is trained using the signal processing output for ground truth GT, ML inference can be used to reduce the computation power requirements on the UWB radar device 10 and hence may achieve considerable power saving.

The proposed method of using the ranging capabilities of the UWB system can be used to also build a ground truth system for "offline" training of the ML-model 10, which would otherwise require significant investments in an expensive independent ground truth system.

The present disclosure refers to a method by which real-time training of ML model for target detection can be achieved by using the ranging (device to device) capabilities of the UWB system to get target distance estimates that can be used as the ground truth for training.

In this way, accurate detection and tracking of targets in challenging environments using a pretrained ML model is provided. Real-time training of the ML model using ranging measurements is thus provided, wherein the pretrained ML model can be used in several applications including various radar use cases such as breathing detection (e.g. child presence detection in automotive), person tracking, camera autofocus, etc.

The proposed method can be implemented at least partially as a software which can be stored in a computer readable memory or at least partially as a firmware or at least partially as a hardware (e.g. an UWB radar IC).

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

The systems and methods described herein may at least partially be embodied by a computer program or a plurality of computer programs, which may exist in a variety of forms both active and inactive in a single computer system or across multiple computer systems. For example, they may exist as software program(s) comprised of program instructions in source code, object code, executable code or other formats for performing some of the steps. Any of the above may be embodied on a computer readable medium, which may include storage devices and signals, in compressed or uncompressed form.

It is noted that the embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document. E.g., the proposed method may be carried out not only in the context of UWB radar, but in the context of a radar device of any technology.

Moreover, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

It has to be noted that embodiments have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this application.

Reference numerals:

| | |
|---|---|
| 1 | target |
| 10 | ML model |
| 11 | multiplexer |
| 12 | summing point |
| 20, 20' | range doppler map |
| 30 | ranging distance measurements |
| 40 | radar signal processing |
| 50 | gradient descent and back propagation block |
| 100 | 1st UWB radar device |
| 101 | 2nd UWB radar device |
| 200... 210 | method steps |
| d | distance |
| D | Doppler frequency |
| GT | ground truth |
| P | pulses |
| RFRI | radar frame repetition interval |
| S | summing point |
| S1... Sn | method steps |
| t | time |
| $T_{prop}$ | propagation delay |
| $T_{reply}$ | time for response |
| $T_{round}$ | total time |
| Ts | receiver sampling time |
| $T_{RFRI}$ | period of RFRI |

**Claims**

1. Method for providing a machine learning, ML, model (10), the ML model (10) to be used for detection of radar targets (1), comprising the steps:

   - providing of ground truth (GT);
   - wherein the ground truth (GT) is provided either from UWB ranging or from results of radar signal processing; and
   - training of the ML model (10) under usage of the ground truth (GT) together with results of radar signal processing (40).

2. Method according to claim 1, wherein the ground truth (GT) is represented by estimated target distance or estimated target location, wherein the target location is specified via distance and angle.

3. Method according to claim 1 or 2, wherein data of a range doppler map (20) is used as the results of the radar processing (40) and input to the ML model (10).

4. Method according to any of the preceding claims, wherein the training process of the ML model (10) is performed online or offline before using it in an inference mode with the radar device (100).

5. Method according to any of the preceding claims, wherein the ground truth (GT) is obtained by means of a UWB radar device (100) operated in at least one of the group consisting of radar mode, ranging mode.

6. Method according to any of the preceding claims, wherein for obtaining results of UWB ranging and radar signal processing and ranging packets and radar packets are sent by the radar device (100) in a time-interleaved way simultaneously.

7. Method according to any of the preceding claims, wherein a retraining of the ML model (10) is performed.

8. Method according to any of the preceding claims, wherein radar signal processing is also employed in the radar device to estimate a target distance and can additionally be used to provide ground truth for training the ML model.

9. Radar device (100) configured to use a ML method (10) having been trained by using a method according to any of the preceding claims.

10. Computer implemented method comprising executable instructions storable on computer-readable storage medium which, when executed by a radar device (100) cause said radar device (100) to carry out the method of any of claims 1 to 8.

11. Computer implemented method comprising executable instructions storable on computer-readable storage medium which, when executed by an electronic device cause said electronic device to carry out the method of any of claims 1 to 8.

**Amended claims in accordance with Rule 137(2) EPC.**

1. Method for providing a machine learning, ML, model (10), the ML model (10) to be used for detection of radar targets (1) using a UWB radar device (100), comprising the steps:

   - providing of ground truth, GT;
   - wherein the ground truth, GT, is provided either from UWB ranging or from results of radar signal processing (40), wherein the ground truth, GT, is obtained by means of the UWB radar device (100) operated in at least one of a group consisting of radar mode, ranging mode, wherein in the radar mode a transmitter and a receiver of the UWB radar device (100) are turned on simultaneously and wherein in the ranging mode the transmitter and the receiver of the UWB radar device (100) are not turned on simultaneously; and
   - training of the ML model (10) under usage of the ground truth, GT.

2. Method according to claim 1, wherein the ground truth,GT, is represented by estimated target distance or estimated target location, wherein the target location is specified via distance and angle.

3. Method according to claim 1 or 2, wherein data of a range doppler map (20) is used as the results of the radar signal processing (40) and input to the ML model (10).

4. Method according to any of the preceding claims, wherein a training process of the ML model (10) is performed online or offline before using it in an inference mode with the UWB radar device (100).

5. Method according to any of the preceding claims, wherein for obtaining results of UWB ranging and radar signal processing and ranging packets and radar packets are sent by the radar device (100) in a time-interleaved way simultaneously.

6. Method according to any of the preceding claims, wherein a retraining of the ML model (10) is performed.

7. Method according to any of the preceding claims, wherein radar signal processing is also employed in the radar device to estimate the target distance and can additionally be used to provide ground truth for training the ML model (10).

8. Radar device (100) configured to use a ML method (10) having been trained by using a method according to any of the preceding claims.

9. Computer implemented method comprising executable instructions storable on computer-readable storage medium which, when executed by a radar device (100) cause said radar device (100) to carry out the method of any of claims 1 to 7.

10. Computer implemented method comprising executable instructions storable on computer-readable storage medium which, when executed by an electronic device cause said electronic device to carry out the method of any of claims 1 to 7.

$$\tau = \frac{2d}{c}$$

Fig. 1

Fig. 2

Radar Frame n

$T_{RFRI}$

Radar Frame n+1

Channel Impulse Response (CIR)

Reflection from first target

Reflection from second target

Reflection from third target

TX start

$\tau_{tgt1}$

$\tau_{tgt2}$

$\tau_{tgt3}$

delay $\tau$

Fig. 3

EP 4 610 691 A1

| $h(n-N+1,1)$ | $h(n-N+1,2)$ | $\cdots$ | $h(n-N+1,\tau)$ | $\vdots$ | $h(n-N+1,L)$ |
|---|---|---|---|---|---|
| $h(n-N+2,1)$ | $h(n-N+2,2)$ | $\cdots$ | $h(n-N+2,\tau)$ | | $h(n-N+2,L)$ |
| $\cdots$ | $\ddots$ | | $\cdots$ | $\ddots$ | $\cdots$ |
| $h(n,1)$ | $h(n,2)$ | $\cdots$ | $h(n,\tau)$ | | $h(n,L)$ |

Fig. 4

Fig. 5

Fig. 6

Fig. 7

Fig. 8

Fig. 9

Fig. 10

Fig. 11

Fig. 12

EP 4 610 691 A1

Fig. 13

Fig. 14

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/404490 A1 (EVANS NICK SHADBEH [US] ET AL) 22 December 2022 (2022-12-22) <br> * paragraphs [0007], [0008], [0032], [0034]; figure 1 * <br> * paragraphs [0036] - [0040]; figure 2 * <br> * paragraphs [0050] - [0052]; figure 3 * <br> * paragraphs [0060] - [0063]; figure 6 * <br> * paragraphs [0064], [0065]; figure 7 * <br> ----- | 1-11 | INV. <br> G01S7/288 <br> G01S7/41 <br> G01S13/58 <br> G01S13/42 |
| X | US 2019/391251 A1 (BHARADWAJ JR SACHIN [IN] ET AL) 26 December 2019 (2019-12-26) <br> * paragraphs [0004], [0021], [0027] - [0035], [0048] - [0053]; figures 1-6,8-10 * <br> ----- | 1-11 | |
| | | | TECHNICAL FIELDS SEARCHED (IPC) <br><br> G01S |

The present search report has been drawn up for all claims

| Place of search | Date of completion of the search | Examiner |
|---|---|---|
| Munich | 8 November 2024 | Schmelz, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 0578

This annex lists the patent family members relating to the patent documents cited in  the above-mentioned European search report.
The members are as contained in the European Patent Office EDP file on
The European Patent Office is in no way liable for these particulars which are merely given for the purpose of information.

08-11-2024

| Patent document cited in search report | Publication date | Patent family member(s) | Publication date |
|---|---|---|---|
| US 2022404490 A1 | 22-12-2022 | NONE | |
| US 2019391251 A1 | 26-12-2019 | CN 112105948 A | 18-12-2020 |
| | | EP 3811110 A1 | 28-04-2021 |
| | | US 2019391251 A1 | 26-12-2019 |
| | | US 2021364624 A1 | 25-11-2021 |
| | | WO 2020005943 A1 | 02-01-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **N. SCHEINER ; N. APPENRODT ; J. DICKMANN ; B. SICK**. Automated ground truth estimation of vulnerable road users in automotive radar data using GNSS. *Proc. IEEE MTT-S International Conference Microwave Intelligent Mobility*, 2019

- **H. CAESAR et al.** nuScenes: A multimodal dataset for autonomous driving. *Proc. IEEE Conf. Comput. Vis. Pattern Recognit.*, 2020
- **JIANG, W. ; REN, Y. ; LIU, Y. ; LENG, J**. Artificial Neural Networks and Deep Learning Techniques Applied to Radar Target Detection: A Review. *Electronics*, 2022